# EUROPÄISCHE PATENTSCHRIFT

(11) **EP 0 728 794 B1**
(45) Veröffentlichungstag und Bekanntmachung des Hinweises auf die Patenterteilung: **16.06.1999**
(21) Anmeldenummer: 96101785.2
(22) Anmeldetag: 08.02.1996
(51) Int. Cl.: C08G 77/38, C08G 77/46, C08G 77/44

(54) **Verfahren zur Herstellung von Carbonatgruppen enthaltenden Organopolysiloxanen**
Process for the production of carbonate group containing organopolysiloxanes
Procédé de préparation d'un organopolysiloxane ayant des groupes carbonate

(30) Priorität: 21.02.1995 DE 19505892
(43) Veröffentlichungstag der Anmeldung: 28.08.1996
(73) Patentinhaber: Th. Goldschmidt AG, 45127 Essen (DE)
(72) Erfinder: Lersch, Peter, Dr., D-46119 Oberhausen (DE); Weitemeyer, Christian, Dr., D-45134 Essen (DE)

(56) Entgegenhaltungen:
- EP-A- 0 337 926
- DE-A- 3 529 263
- POLYMER PREPRINTS (AM. CHEM.SOC., DIV. POLYM. CHEM), Bd. 35, Nr. 1, 1994, Seite 496-497 XP002004003 Z.ZHU,C-Y YANG A.G.EINSET: "New Polysiloxanes Bearing Cyclic Carbonate Side Chains: Synthesis and Ionic Conductivity Studies."

## Beschreibung

Die Erfindung betrifft ein Verfahren zur Herstellung von Organopolysiloxanen, die cyclische Carbonatgruppen enthalten und geeignet sind als Zwischenprodukt zur weiteren Umsetzung mit Verbindungen, die nukleophile Gruppen aufweisen.

Zum Einsatz von Polysiloxanen in polaren Medien ist es erforderlich, polare Gruppen in das Siloxan einzubauen. Hierzu werden in der Literatur zahlreiche Möglichkeiten beschrieben.

Die Synthese von Siloxan-Carbonatblockcopolymeren ist aus der Patentliteratur bekannt (z. B. US 3 189 662; US 3 821 325 oder US 4 657 989). Dabei handelt es sich in der Mehrzahl um Bisphenol A-terminierte Polydimethylsiloxane, die durch die Reaktion von Polysiloxanen mit reaktiven Endgruppen und Bisphenolen in Gegenwart von Phosgen oder Diarylcarbonaten erhalten werden. Die Verknüpfung erfolgt dabei überwiegend über hydrolytisch instabile Si-O-C-Bindungen.

Siloxane mit SiC-gebundenen Carbonatgruppen werden von Boileau et al. beschrieben in Polym. Prepr. (Am. Chem. Soc., Div. Polym. Chem., 1990, 31 (2), Seite 420-1). Die Herstellung erfolgt über eine Hydrosilylierungsreaktion von SiH-Siloxanen mit Allylphenylcarbonat. Nach den Angaben der Autoren verläuft die Reaktion allerdings recht komplex und nicht befriedigend in die gewünschte Richtung, denn ca. 50 % der Carbonatfunktionen werden bei den Reaktionsbedingungen unter Kohlendioxid-Abspaltung und Bildung von Si-O-C-funktionellen Siloxanen zersetzt.

Zhu et al. beschreiben in Polym. Prepr. (Am. Chem. Soc., Div. Polym. Chem., 1994, 35 (1), Seite 496-7) die Umesterung von allylfunktionellen 1,2-Diolen, wie z. B. 5-Hexen-1,2-diol, mit Diethylcarbonat und die anschließende platinkatalysierte Hydrosilylierung des Produktes an SiH-Siloxane in verschiedenen Lösungsmitteln, wie Aceton oder Acetonitril. Die Nebenreaktionen können nach Angaben der Autoren durch diesen Verfahrensschritt zwar weitestgehend, aber dennoch nicht vollständig vermieden werden. Nachteilig an dieser Methode ist weiterhin, daß die Reaktion bei moderaten Temperaturen (60 °C) durchgeführt wird und daher recht lange dauert. Weiterhin verringert der Lösungsmittelzusatz nicht nur die Volumenausbeute des Verfahrens, sondern macht mit der Destillation des Lösungsmittels noch einen zusätzlichen mit Kosten verbundenen Aufarbeitungsschritt erforderlich.

Es wurde nun gefunden, daß Organopolysiloxane, die cyclische Carbonatgruppen enthalten, in einem einfachen Verfahren leicht herstellbar sind.

Gegenstand der Erfindung ist demnach ein Verfahren zur Herstellung von cyclische Carbonatgruppen enthaltenden Polysiloxanen der allgemeinen durchschnittlichen Formel 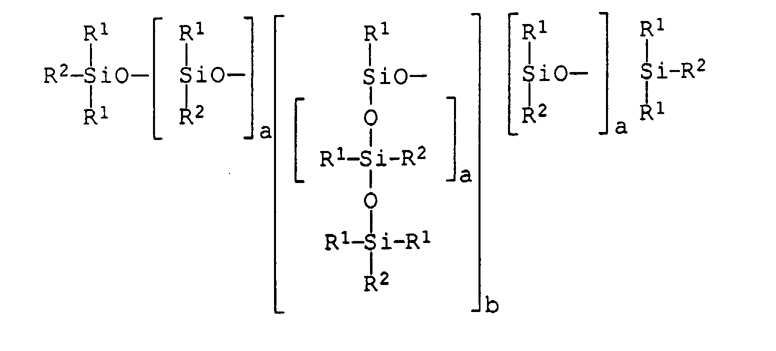 in der die Reste
- R¹: gleich oder verschieden sind und Alkylreste mit 1 bis 4 Kohlenstoffatomen oder Phenylreste bedeuten, mindestens 90 % der Reste R¹ aber Methylreste sind,
- R²: die Bedeutung der Reste R¹ haben können, aber mindestens ein Rest R² ein Rest der allgemeinen Formel 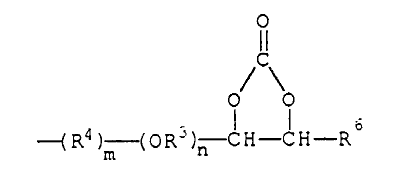 ist, in der
R³ gleiche oder verschiedene Alkylenreste mit 1 bis 4 C-Atomen,
R⁴ ein gegebenenfalls verzweigter Alkylenrest mit 1 bis 20 C-Atomen und
R⁶ H oder ein Alkylrest mit 1 bis 4 C-Atomen oder ein mit R⁴ einen Cyclus bildender Alkylenrest ist und
m einen Wert von 0 oder 1 hat,
n einen Wert von 0 bis 20 hat, wobei entweder m oder n mindestens 1 ist,
- a: einen Wert von 0 bis 1000,
- b: einen Wert von 0 bis 10 hat,
dadurch gekennzeichnet, daß man Verbindungen der allgemeinen durchschnittlichen Formel 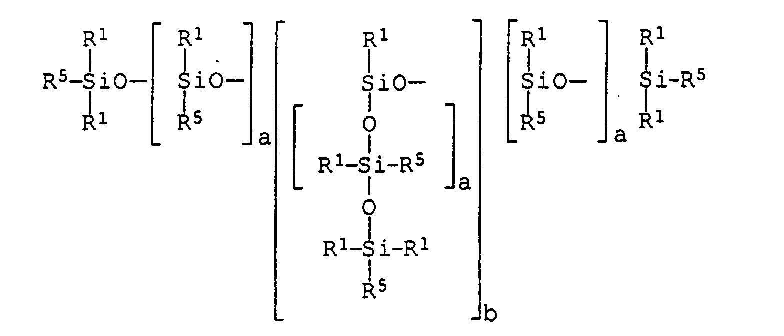 in der
- R⁵: R¹ sein kann, aber mindestens ein Rest R⁵ ein Rest der allgemeinen Formel 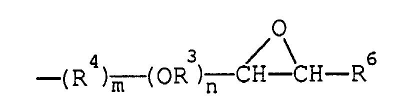 ist,
und die übrigen Reste und Indices die oben angegebene Bedeutung haben,
mit Kohlendioxid umsetzt.

Beispiele für den Rest R² (im Falle R² ≠ R¹) sind somit

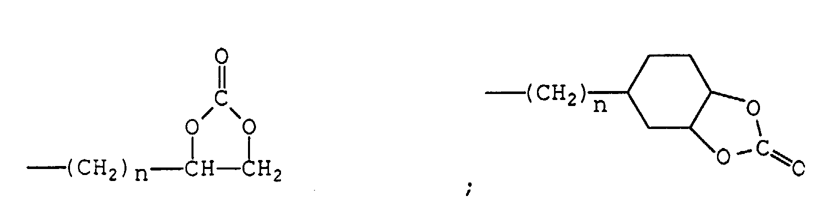

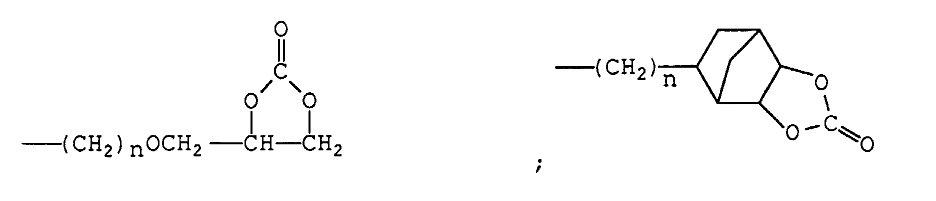

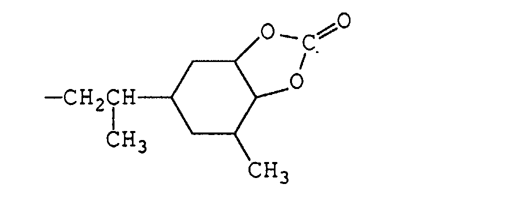

Als Beispiele für die erfindungsgemäß hergestellten Carbonatgruppen enthaltenden Polysiloxane seien genannt:

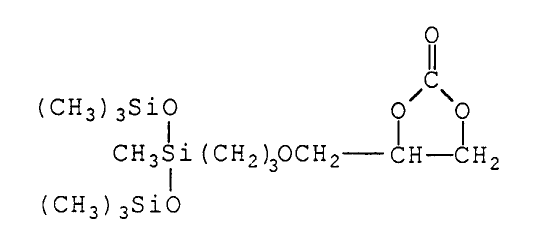

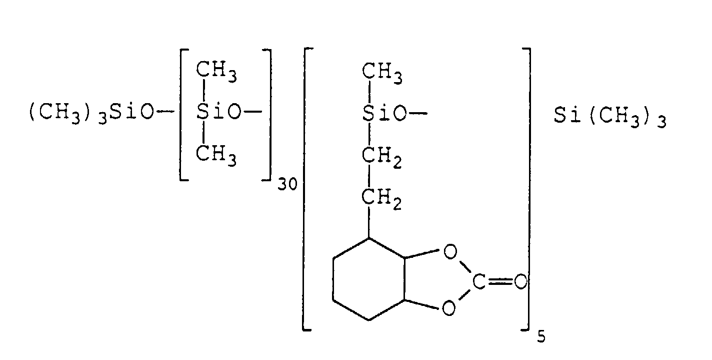

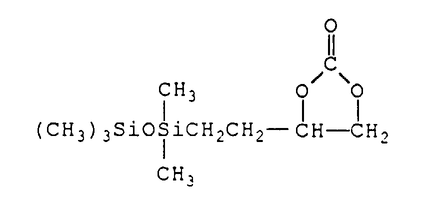

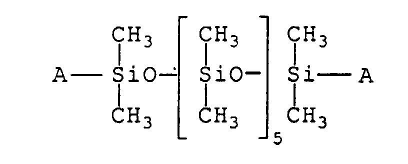

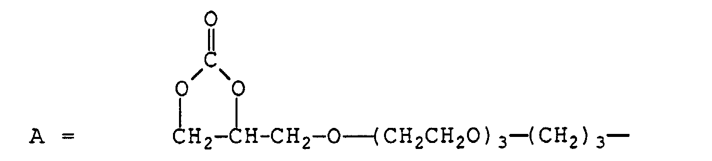

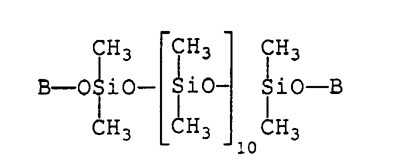

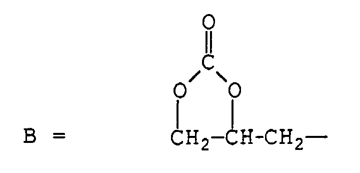

Die Umsetzung erfolgt bevorzugt katalytisch bei Atmosphärendruck bei Temperaturen von 0 bis 180 °C, insbesondere 70 bis 150 °C. Vorzugsweise wird dabei ohne Lösungsmittel gearbeitet.

Die Umsetzung der Oxirane mit CO₂ zu cyclischen Carbonaten ist in der Literatur beschrieben. Von der Vielzahl der dafür beschriebenen Katalysatoren (Lewis-Säuren, Übergangsmetallkomplexe, Organometallverbindungen und Phasentransferreagenzien) sind diejenigen für die Reaktion mit epoxidfunktionellen Siloxanen bevorzugt, die eine hohe katalytische Aktivität aufweisen und gleichzeitig die Bedingung erfüllen, daß durch sie keine Abbaureaktionen am Siloxangerüst induziert werden. Überraschenderweise wurde gefunden, daß quaternäre Oniumsalze bzw. Lithiumsalze diese Anforderungen in hohem Maße erfüllen.

Epoxysiloxane, bei denen die epoxyfunktionellen Reste über SiC-Bindungen mit den Si-Atomen des Siloxans verknüpft sind, werden in an sich bekannter Weise erhalten, indem man an SiH-Gruppen aufweisende Siloxane Epoxyalkene oder Epoxyalkenether, welche eine endständige, der Hydrosilylierung zugängliche Doppelbindung aufweisen, in Gegenwart von Hydrosilylierungskatalysatoren anlagert. Geeignete, kommerziell verfügbare Epoxyalkene oder Epoxyalkenether sind beispielsweise Limonenoxid, Allylglycidylether, Vinylcyclohexenoxid und 3,4-Epoxy-1-buten.

Epoxysiloxane, bei denen die epoxyfunktionellen Reste über SiO-Bindungen mit den Si-Atomen des Siloxans verknüpft sind, werden in an sich bekannter Weise erhalten, indem man an SiCl-Gruppen aufweisende Siloxane hydroxyalkylfunktionelle Epoxide in Gegenwart von Basen als HCl-Fänger anlagert. Geeignete hydroxyalkylfunktionelle Epoxide sind beispielsweise 2,3-Epoxy-1-propanol (Glycidol) oder 2,3-Epoxy-3-phenyl-1-propanol.

Die erfindungsgemäß erhaltenen Siloxane sind hervorragend geeignet als Zwischenprodukt zur weiteren Umsetzung mit Verbindungen mit nukleophilen Gruppen, wie Alkoholen, Mercaptanen und Aminen.

Die Umsetzung verläuft dabei nach folgendem Schema:

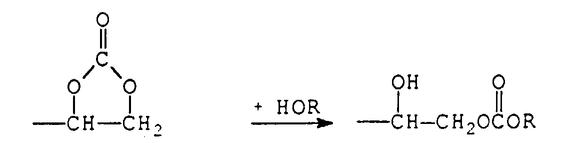

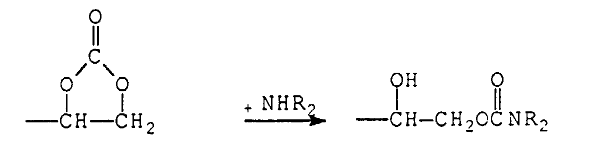

Bei Verwendung von primären Aminen können entsprechende Dimerprodukte hergestellt werden.

Die erfindungsgemäßen Siloxane mit cyclischen Carbonatgruppen sind von hohem Interesse, da sie eine gute Kompatibilität mit den verschiedensten Polymeren aufweisen (PVC) und bedingt durch ihre hohen Polaritäten und hohen Brechungsindices auch als neue Polymermaterialien für optische und elektronische Anwendungen verwendet werden können.

Carbonatfunktionelle Siloxane können ebenso als Kompatibilizer in Kunststoffmischungen verwendet werden, um die mechanischen Eigenschaften zu verändern. Des weiteren können derartige Produkte auch kationisch oder anionisch polymerisiert bzw. mit Epoxiden oder Lactonen copolymerisiert werden. Zudem besitzen sie auch zusätzliches Synthesepotential, da auf Basis solcher carbonatfunktioneller Siloxane eine breite Synthesechemie aufgebaut werden kann.

So sind z. B. durch Umsetzung mit aliphatischen Aminen carbamatfunktionelle Siloxane zugänglich, die weiter zu isocyanathaltigen Siloxanen umgesetzt werden können. Aber auch andere Nucleophile sind prinzipiell zur Derivatisierung geeignet.

Eine wesentliche Bedeutung kommt der Funktionalität der Siloxancopolymeren, d. h. dem Verhältnis zwischen Carbonat- und Siloxangruppen in dem erfindungsgemäß zu verwendenden Organopolysiloxan zu. Mit steigendem Gehalt an Carbonatgruppen in dem erfindungsgemäß zu verwendenden Organopolysiloxan nimmt der polare Charakter des Materials zu, und die Löslichkeit in polaren Lösungsmitteln steigt an. Beispiele für polare Lösungsmittel sind Wasser sowie wasserlösliche organische Lösungsmittel, wie Methanol, Ethanol, Aceton, Dioxan, Dimethylformamid, Tetrahydrofuran, Dimethylsulfoxid sowie deren Gemische.

Auch durch die Alkylensubstituenten, die als Bindeglied zwischen dem Siloxangerüst und den Carbonatgruppen dienen, kann das polare Verhalten zusätzlich beeinflußt werden. Dabei zeigt sich, daß mit zunehmender Kettenlänge der Alkylenreste auch der unpolare Charakter erhöht wird, wohingegen durch die Einführung von Polyetherresten die Löslichkeit in polaren Systemen zusätzlich erhöht wird.

Hierdurch wird dem Fachmann verständlich, daß die erfindungsgemäß zu verwendenden Organopolysiloxane zahlreiche Möglichkeiten bieten, die Polarität mit dem chemischen Charakter des eingesetzten Lösungsmittels, beispielsweise bis zur Wasserlöslichkeit, abzustimmen und deshalb in besonderer Weise dazu geeignet sind, sich dem jeweiligen Verwendungszweck anzupassen.

Sie finden so Verwendung als Additive für Dispersionsfarben oder Lacke oder zum Coaten von Oberflächen von Pigmenten und Füllstoffen.

### Herstellungs- und Verwendungsbeispiele

### Beispiel 1

356,0 g (0,1 Mol) eines seitenständig SiH-funktionalisierten Polydimethylsiloxans der allgemeinen Formel MD₃₆D^{H}₁₂M (Formel 1) und mittleren Gesamtkettenlänge N 50 werden mit 100 ml Toluol und 4 mg (= 20 ppm Pt) Hexachloroplatinsäure H₂PtCl₆ in einem 800-ml-Vierhalskolben, ausgestattet mit Rührer, Tropftrichter, Thermometer und Rückflußkühler, vorgelegt und unter Rühren auf 110 °C aufgeheizt. Bei dieser Temperatur werden 136,8 g (1,2 Mol) Allylglycidether derart zugetropft, daß trotz einsetzender exothermer Reaktion eine Temperatur von 130 °C nicht überschritten wird. Nach beendeter Zugabe wird die Reaktionsmischung noch 1 bis 2 h weiter bei 110 °C gerührt, bis die Umsatzkontrolle über den SiH-Wert zeigt, daß der Allylglycidether vollständig hydrosilylierend angelagert wurde. Bei einem Umsatz von > 99 % wird die Reaktion abgebrochen und die Pt-Katalysatorreste aus der Reaktionsmischung durch Filtration entfernt. Durch Destillation im Ölpumpenvakuum werden der Überschuß an Allylglycidether sowie Lösungsmittel und flüchtige Nebenprodukte entfernt.

49,1 g (0,01 Mol) des so hergestellten Epoxysiloxans (Formel 2) und 50 ml Toluol werden in einem 250-ml-Vierhalskolben, ausgestattet mit Rührer, Gaseinleitungsrohr mit Fritte, Thermcmeter und Rückflußkühler, vorgelegt und nach Zugabe von 0,5 g Tetrabutylammoniumbromid als Katalysator unter Rühren auf 100 °C aufgeheizt. Bei dieser Temperatur wird während der Reaktion ein kontinuierlicher Kohlendioxid-Gasstrom (10 Normliter/h) durch die Mischung geleitet. Mittels ¹H-NMR-Spektroskopie wird die Abnahme der Epoxidgruppen als Funktion der Zeit verfolgt. Nach 3 und 6 h waren 73 % bzw. 90 % der Epoxygruppen in die entsprechenden cyclischen Carbonateinheiten überführt. Nach insgesamt 9 h Reaktionsdauer waren keine Epoxidgruppen mehr nachweisbar. Nach der Destillation des Lösungsmittels wird ein hellgelbes, flüssiges Reaktionsprodukt erhalten, welches seitenständige 4-(Propyloxymethyl)-1,3-dioxolan-2-on-Gruppen aufweist und nach den Analysenergebnissen der zu erwartenden mittleren Zusrmmensetzung MD₃₆D^{Carbonat}₁₂M (Formel 3) entspricht.

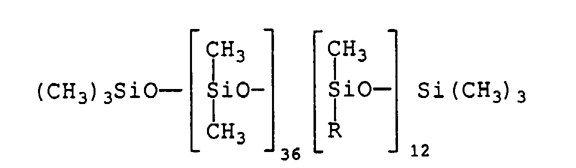

Formel 1 R = -H

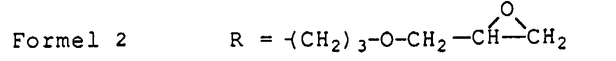

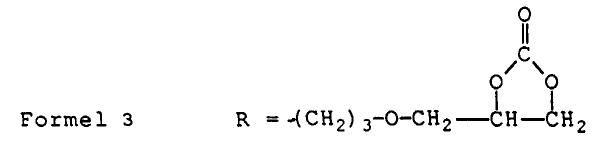

### Beispiel 2

In analoger Weise wie in Beispiel 1 dargelegt wird ein Epoxysilan der allgemeinen Formel MD₁₅D^{Epoxid}₈M (Formel 4) und mittleren Gesamtkettenlänge N = 25 durch die platinkatalysierte Anlagerung von 3,4-Epoxy-1-buten an ein entsprechendes SiH-Siloxan hergestellt. Daran anschließend werden 200 g (0,86 Mol) dieses Materials in einem 500-ml-Vierhalskolben, ausgestattet mit Rührer, Gaseinleitungsrohr mit Fritte, Thermometer und Rückflußkühler, vorgelegt und nach Zugabe von 2 g Tetrabutylphosphoniumchlorid (70 %ig in Isopropanol) als Katalysator unter Rühren auf 120 °C aufgeheizt. Durch das Durchleiten eines kontinuierlichen Kohlendioxid-Gasstroms (8 Normliter/h) wird das Epoxysiloxan unter diesen Bedingungen innerhalb von 3 h zum entsprechenden flüssigen gelben carbonatfunktionellen Siloxan (Formel 5) modifiziert.

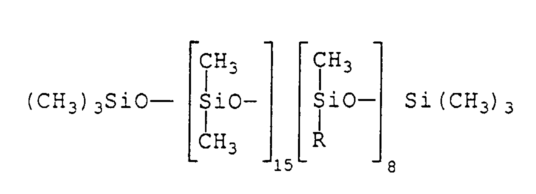

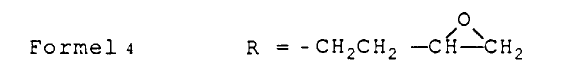

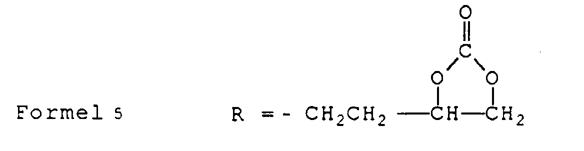

### Beispiel 3

100 g (0,2 Mol) eines endständig Chlordimethylsiloxygruppen (Formel 6) aufweisenden linearen Polydimethylsiloxans der mittleren Gesamtkettenlänge N = 6 werden unter Zugabe von 60 g (0,4 Mol) Glycidol (2,3-Epoxy-1-propanol) und 40,4 g (0,4 Mol) Triethylamin in einer basenkatalysierten Kondensationsreaktion zu einem Si-O-C-verknüpften Epoxysiloxan bei 50 °C unter Rühren miteinander umgesetzt. Nach Filtration des ausgefallenen Triethylammoniumhydrochlorids wird das Reaktionsprodukt analog wie in den Beispielen 1 und 2 beschrieben durch Einleiten von gasförmigem Kohlendioxid (22 Normliter/h) in der Gegenwart von 0,5 Gew.-% Hexadecyltrimethylammoniumbromid bei einer Temperatur von 100 °C in das entsprechende carbonatfunktionelle Siloxan der mittleren Formel M^{Carbonat}D₄M^{Carbonat} (Formel 7) überführt.

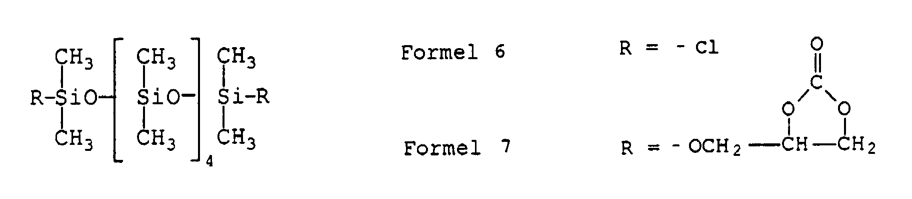

### Beispiel 4

Durch die platinkatalysierte Anlagerung von Allylglycidether an ein Poly(methylhydridosiloxy)gruppen aufweisendes SiH-Siloxan wird ein Material der mittleren Formel MD^{Epoxid}₃₀M (Formel 8) erhalten, das analog der in Beispiel 1 beschriebenen Methode in Gegenwart von 2 Gew.-% Benzyltriethylammoniumchlorid als Katalysator in 7 h bei 130 °C mit gasförmigem Kohlendioxid (0,2 Normliter/h) zum entsprechenden carbonatfunktionellen Siloxan MD^{Carbonat}₃₀M (Formel 9) umgesetzt wird.

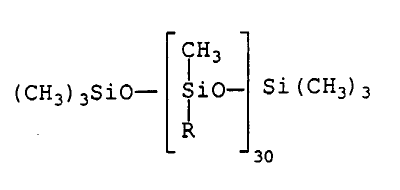

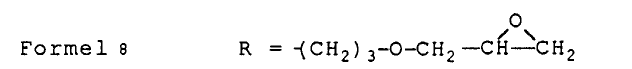

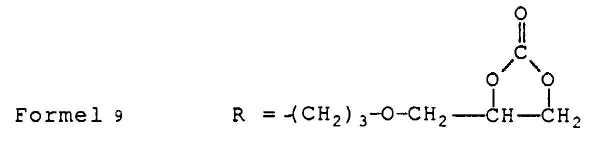

### Beispiel 5

Ein end- und seitenständig modifiziertes Epoxysiloxan der Formel M^{Epoxid}D₄D^{Epoxid}₄M^{Epoxid} (Formel 10) wurde durch die Hydrosilylierung eines Polyoxyethylenpolymeren der mittleren Durchschnittsformel CH₂=CH-CH₂-(O-C₂H₄-)₇OH an das entsprechende SiH-Siloxan und der daran anschließenden Endverkappung der primären Hydroxygruppen des Siloxancopolymeren mit Epichlorhydrin erhalten. In einer nachfolgenden Reaktion wurden die Epoxygruppen in beschriebener Weise unter Zusatz von 2 Gew.-% Lithiumchlorid als Katalysator mit gasförmigem Kohlendioxid (0,2 Normliter/h) bei 125 °C in die entsprechenden Carbonatgruppen überführt.

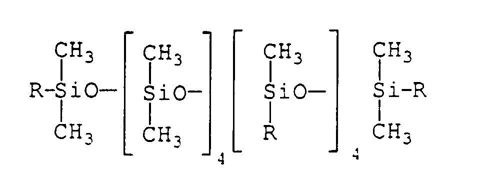

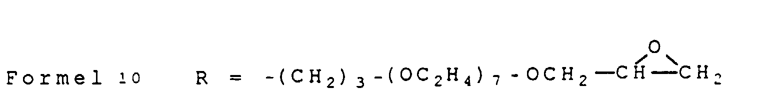

### Anwendungtechnische Prüfungen

Zur Überprüfung der anwendungstechnischen Eigenschaften der erfindungsgemäß zu verwendenden modifizierten carbonatfunktionellen Polydimethylsiloxane wurde das Produkt aus Beispiel 4 in jeweils 1 %iger Konzentration mit diversen Lösungsmitteln abgemischt. In der nachfolgenden Tabelle sind die erhaltenen Ergebnisse im Vergleich mit dem nicht erfindungsgemäßen Ausgangsmaterial angeführt.

| **Lösungsmittel** | **MD**^{**Epoxid**}_{**30**}**M** | **MD**^{**Carbonat**}_{**30**}**M** |
|---|---|---|
| Dichlormethan | 1 | 1 |
| Diethylcarbonat | 1 | 2 |
| Aceton | 2 | 1 |
| Tetrahydrofuran | 2 | 1 |
| Dimethylsulfoxid | 1 | 1 |
| Dimethylformamid | 1 | 1 |
| Ethanol | 2 | 3 |
| Methanol | 1 | 2 |
| Wasser | 4 | 3 |
| Zeichenerklärung: 1 = löslich bei Raumtemperatur 2 = löslich in der Wärme 3 = teilweise löslich, Quellung 4 = unlöslich | | |

Aus der Tabelle ergibt sich, daß die erfindungsgemäß zu verwendenden modifizierten Organopolysiloxane die gewünschten anwendungstechnischen Eigenschaften zeigen.

## Patentansprüche

1. Verfahren zur Herstellung von cyclische Carbonatgruppen enthaltenden Polysiloxanen der allgemeinen durchschnittlichen Formel 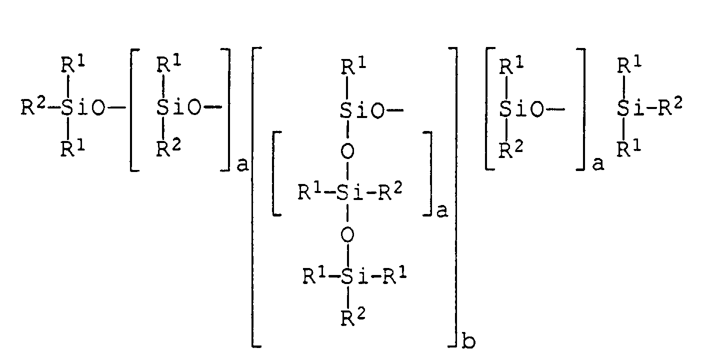 in der die Reste
R¹ gleich oder verschieden sind und Alkylreste mit 1 bis 4 Kohlenstoffatomen oder Phenylreste bedeuten, mindestens 90% der Reste R¹ aber Methylreste sind,
R² die Bedeutung der Reste R¹ haben können, aber mindestens ein Rest R² ein Rest der allgemeinen Formel 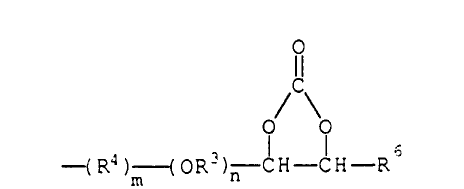 ist, in der
R³ gleiche oder verschiedene Alkylenreste mit 1 bis 4 C-Atomen,
R⁴ ein gegebenfalls verzweigter Alkylenrest mit 1 bis 20 C-Atomen und
R⁶ H oder ein Alylrest mit 1 bis 4 C-Atomen oder ein mit R⁴ einen Cyclus bildender Alkylenrest ist und
m einen Wert von 0 oder 1 hat,
n einen Wert von 0 bis 20 hat, wobei entweder m oder n mindestens 1 ist,
a einen Wert von 0 bis 1000,
b einen Wert von 0 bis 10 hat
dadurch gekennzeichnet, daß man Verbindungen der allgemeinen durchschnittlichen Formel 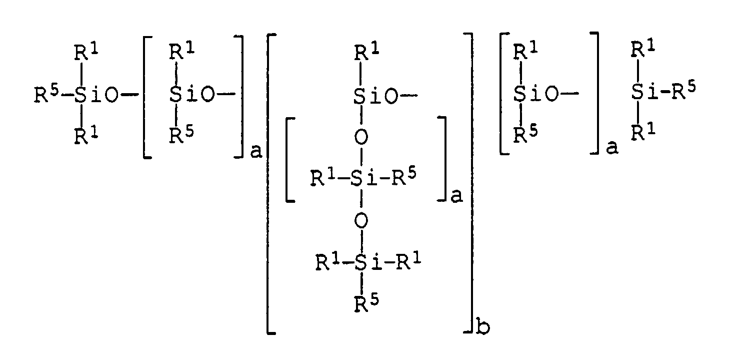 in der
R⁵ R¹ sein kann, aber mindestens ein Rest R⁵ ein Rest der allgemeinen Formel 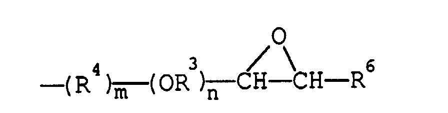 ist,
und die übrigen Reste und Indices die oben angegebene Bedeutung haben,
mit Kohlendioxid umsetzt.

2. Verfahren nach Anspruch 1, dadurch gekennzeichnet, daß a einen Wert von 5 bis 200 und b einen Wert von 0 bis 2 hat.

3. Verfahren nach den Ansprüchen 1 oder 2, dadurch gekennzeichnet, daß b einen Wert von 0 hat.

4. Verfahren nach einem oder mehreren der vorhergehenden Ansprüche, dadurch gekennzeichnet, daß die Reste R¹ Methylreste sind.

5. Verfahren nach den Ansprüchen 1 bis 4, dadurch gekennzeichnet, daß man die Umsetzung katalytisch bei Atmosphärendruck bei Temperaturen von 0 bis 180 °C, insbesondere 70 bis 150 °C, durchführt.

## Claims

1. Process for the preparation of cyclic-carbonate-containing polysiloxanes of the general average formula 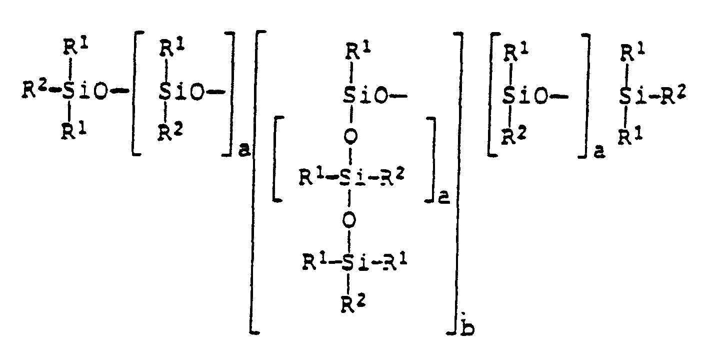 where the radicals
R¹ are identical or different and are alkyl radicals having 1 to 4 carbon atoms or phenyl radicals, but at least 90% of the radicals R¹ are methyl radicals,
R² can have the meaning of the radicals R¹, but at least one radical R² is a radical of the general formula 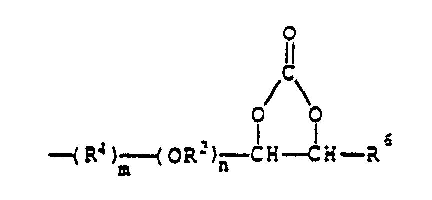 where
R³ are identical or different alkylene radicals having 1 to 4 carbon atoms,
R⁴ is an unbranched or branched alkylene radical having 1 to 20 carbon atoms and
R⁶ is H or an alkyl radical having 1 to 4 carbon atoms or an alkylene radical forming a ring with R⁴ and
m is 0 or 1,
n is from 0 to 20,
where either m or n is at least 1,
a is from 0 to 1000,
b is from 0 to 10
characterized in that compounds of the general average formula 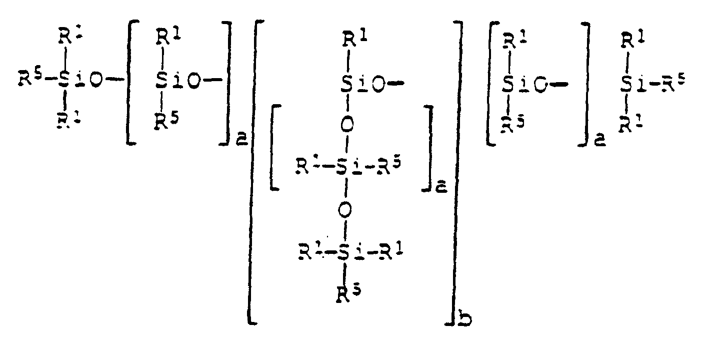 where
R⁵ can be R¹ but at least one radical R⁵ is a radical of the general formula 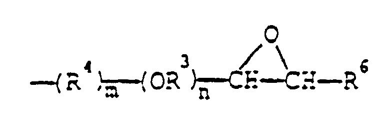
and the remaining radicals and indices have the meaning given above,
are reacted with carbon dioxide.

2. Process according to Claim 1, characterized in that a is from 5 to 200 and b is from 0 to 2.

3. Process according to Claim 1 or 2, characterized in that b is 0.

4. Process according to one or more of the preceding claims, characterized in that the radicals R¹ are methyl radicals.

5. Process according to Claims 1 to 4, characterized in that the reaction is carried out catalytically at atmospheric pressure at temperatures of from 0 to 180°C, in particular from 70 to 150°C.

## Revendications

1. Procédé de préparation de polysiloxanes contenant des groupements carbonate cycliques de formule moyenne générale 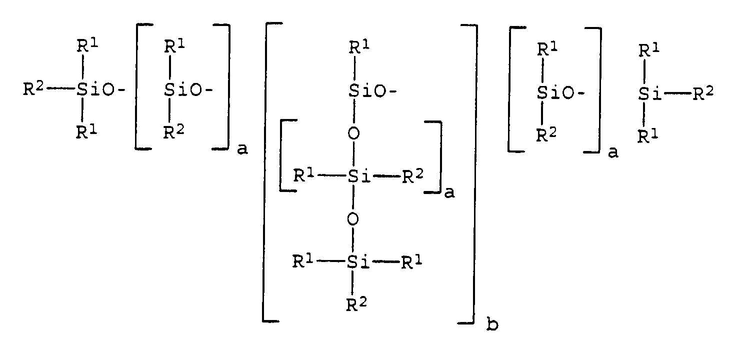 dans laquelle les radicaux
R¹ sont identiques ou différents et signifient des radicaux alkyle avec 1 à 4 atomes de carbone ou des radicaux phényle, 90% au moins des radicaux R¹ étant toutefois des radicaux méthyle;
R² peuvent avoir la signification des radicaux R¹, un radical R² au moins étant toutefois un radical de formule générale 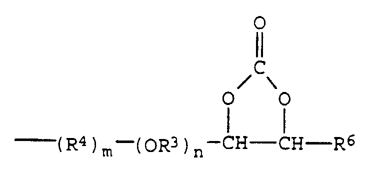 dans laquelle
R³ sont des radicaux alkyle identiques ou différents avec 1 à 4 atomes de carbone;
R⁴ est un radical alkylène le cas échéant ramifié avec 1 à 20 atomes de carbone, et
R⁶ est H ou un radical alkyle avec 1 à 4 atomes de carbone ou un radical alkylène formant un cycle avec R⁴, et
m a une valeur de 0 ou 1,
n a une valeur de 0 à 20,
soit m soit n étant au moins 1,
a a une valeur de 0 à 1000,
b a une valeur de 0 à 10,
caractérisé en ce que l'on fait réagir des composés de formule moyenne générale 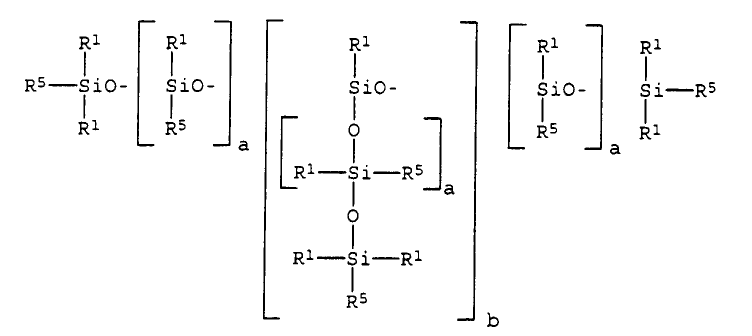 dans laquelle
R⁵ peut être R¹, un radical R⁵ au moins étant toutefois un radical de formule générale 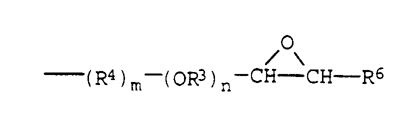
et les autres radicaux et indices ont la signification donnée ci-dessus,
avec du dioxyde de carbone.

2. Procédé suivant la revendication 1, caractérisé en ce que a a une valeur de 5 à 200 et b a une valeur de 0 à 2.

3. Procédé suivant les revendications 1 ou 2, caractérisé en ce que b a une valeur de 0.

4. Procédé suivant une ou plusieurs des revendications précédentes, caractérisé en ce que les radicaux R¹ sont des radicaux méthyle.

5. Procédé suivant les revendications 1 à 4, caractérisé en ce que l'on effectue la réaction de manière catalytique sous pression atmosphérique à des températures de 0 à 180°C, en particulier 70 à 150°C.
